# DEMANDE DE BREVET EUROPEEN

(11) **EP 0 605 032 A1**
(43) Date de publication de la demande: **06.07.1994**
(21) Numéro de dépôt: 93203441.6
(22) Date de dépôt: 09.12.1993
(51) Int. Cl.: H04N 7/133, H04N 5/14

(54) **Etage de détection de mouvement et codeur l'incluant**

(30) Priorité: 16.12.1992 FR 9215191; 17.03.1993 FR 9303091
(71) Demandeur: LABORATOIRES D'ELECTRONIQUE PHILIPS, 94450 Limeil-Brévannes (FR); Philips Electronics N.V., 5621 BA Eindhoven (NL)
(72) Inventeur: Fert, Etienne, Société Civile S.P.I.D., F-75008 Paris (FR)
(74) Mandataire: Landousy, Christian

(57) **Abrégé**

Etage de détection de mouvement dans des signaux numériques correspondant à des images initiales à trames entrelacées, comprenant un circuit de conversion de format et, en parallèle sur la sortie dudit circuit, des première et deuxième voies de filtrage, ainsi qu'un comparateur des signaux de sortie desdites première et deuxième voies de filtrage, cet étage étant utilisable notamment dans un dispositif de codage comprenant d'une part une voie de codage (101) et une voie de prédiction associée (102), et d' autre part un sous-ensemble (103) de désentrelacement des blocs subdivisant les images. Ce sous-ensemble (103) comprend lui-même un étage de détection de mouvement (210) et un étage de commutation (221, 222, 223, 224, 231, 232, 233, 234) prévu pour autoriser dans la voie de codage (101) le désentrelacement des blocs et, de façon correspondante dans la voie de prédiction associée (102), le réentrelacement des blocs.
- Application :: codeurs de signaux de télévision conformes au standard ISO-MPEG

## Description

La présente invention concerne un étage de détection de mouvement dans des signaux numériques correspondant à des images initiales à trames entrelacées, ainsi qu'un dispositif de codage de ces signaux incluant un tel étage de détection de mouvement. Cette invention est applicable notamment dans le domaine du codage d'images de télévision, pour la transmission et/ou l'enregistrement de signaux de télévision numériques (luminance ou chrominance), ou bien dans le domaine de la conversion de format.

La demande de brevet européen EP-0282135 décrit un système de télévision comprenant une partie codage et une partie décodage. Dans la partie codage du système, qui est par exemple un enregistreur vidéo, des signaux analogiques d'origine sont échantillonnés puis convertis en signaux numériques. Ces signaux numériques, qui sont représentatifs des images d'origine, sont subdivisés en blocs de signaux correspondant à M x N points d'image (ou pixels), avec par exemple M = N = 8 ou 16 dans de nombreux cas. Les blocs ainsi constitués subissent une transformation (ici une transformation cosinus discrète) en un jeu de coefficients y(i,k) qui sont alors fournis à un circuit de codage à longueur variable (i et k désignent les numéros des lignes et des colonnes desdits coefficients dans le tableau qu'ils constituent).

Cette partie codage du système comprend également un détecteur de mouvement qui émet un signal de commutation entre deux modes de fonctionnement, à savoir un mode dit intra-trame et un mode dit intra-image. En effet, les prises de vue des deux trames d'une image sont réalisées à des moments différents, et, localement, deux lignes d'image adjacentes (et appartenant donc l'une à une trame et l'autre à l'autre trame) peuvent avoir des niveaux de luminance et/ou de chrominance très différents, qui se traduisent visuellement, au niveau des images finalement reconstituées après décodage, par des effets de scintillement de ligne. Le détecteur de mouvement a pour objet de déterminer si un objet présent dans une image s'est déplacé ou non pendant l'intervalle de temps qui sépare deux trames successives, et si, en outre, ce mouvement, lorsqu'il existe, est perceptible dans un bloc d'image (qui ne représente, on l'a vu, qu'une faible fraction de l'image, 64 pixels dans le cas d'un bloc de 8 x 8 pixels).

Pour l'une des deux valeurs possibles du signal de commutation délivré par le détecteur de mouvement, ce dernier place le système en mode intra-image (pas de mouvement notable), et, pour l'autre valeur, en mode intra-trame (existence d'un mouvement perceptible au niveau du bloc d'image). La sélection d'un mode ou de l'autre affecte les signaux d'origine au niveau de la transformation qu'ils subissent : en mode intra-image, les blocs sont traités tels quels, alors qu'en mode intra-trame, les deux trames de chaque bloc sont préalablement séparées en deux sous-blocs comprenant l'un les lignes impaires du bloc et l'autre les lignes paires. Les valeurs des coefficients obtenus alors par ladite transformation sur chacun desdits sous-blocs ne sont maintenant plus perturbées par l'existence de mouvement dans l'image, qui se traduit visuellement par les effets de scintillement de ligne mentionnés plus haut, et une réduction sensible du débit après codage est obtenue par rapport au cas où le mode intra-image serait maintenu malgré l'existence du mouvement inter-trames.

Dans le document cité et dont le contenu vient d'être succinctement rappelé, le principe de fonctionnement du détecteur de mouvement repose sur une mesure de fréquence dans la direction verticale. Plus précisément, chaque bloc d'image (de dimension 8 x 8 pixels) subit une transformation dite de Hadamard, à la suite de laquelle la présence de la plus grande fréquence verticale dans le bloc est connue par l'intermédiaire de la valeur du coefficient y(1,8), dont l'expression est donnée par la relation suivante : 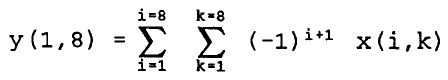
où x(i,k) est représentatif de la valeur du niveau de gris attachée, dans le bloc considéré, au pixel de la ligne i et de la colonne k. Cette valeur de coefficient est comparée à un seuil, et le résultat de cette comparaison commande l'émission dudit signal de commutation et donc le choix du mode intra-image ou du mode intra-trame.

Cependant, la mise en oeuvre de ce principe de fonctionnement ne peut pas être considérée comme satisfaisante. Certains blocs d'image, caractérisés par l'existence d'un mouvement inter-trames déterminé, ne sont pourtant pas détectés comme tels et restent traités selon le mode intra-image, ce qui, quelle que soit l'application considérée, conduit à un fonctionnement non optimal.

Un premier but de l'invention est de proposer un étage de détection de mouvement dont le fonctionnement s'avère plus sûr que dans le cas précédemment décrit.

A cet effet l'invention concerne un étage de détection de mouvement tel que défini dans le préambule de la description et qui est en outre caractérisé en ce qu'il comprend :
(a) un circuit de conversion de format, pour la subdivision desdits signaux en blocs de m x n points d'image, ou en macroblocs de (p x m) x (q x n) points d'image regroupant un nombre déterminé desdits blocs, les nombres m, n, p et q étant des entiers positifs ;
(b) en parallèle sur la sortie dudit circuit, des première et deuxième voies de filtrage de chacun desdits blocs ou macroblocs, comprenant chacune des moyens de filtrage vertical pondéré prévus pour opérer sur des lignes d'image successives de chaque bloc ou macrobloc dans le cas de la première voie de filtrage et sur des lignes de trame successives de chaque bloc ou macrobloc dans le cas de la deuxième voie de filtrage ;
(c) un comparateur des signaux de sortie desdites première et deuxième voies de filtrage.

La structure ainsi proposée est avantageuse en ce sens qu'elle repose sur un principe de fonctionnement qui consiste à comparer d'une part des données de bloc attachées à une trame seulement et d'autre part des données de bloc correspondant aux deux trames, c'est-à-dire à comparer réellement des signaux en présence éventuelle de mouvement et en l'absence de mouvement, avant de faire le choix du mode de transformation optimal en fonction de l'application considérée (c'est-à-dire le choix qui conduira à la réduction de débit la plus efficace dans le cas d'une application au codage de signaux, ou bien, dans le cas d'une application à la conversion de format, le choix qui conduira à la façon la plus appropriée de réaliser cette conversion). L'application d'un tel critère s'avère en effet bien plus concluante que dans la réalisation antérieure précédemment décrite, dans la mesure où, après détection de l'existence du mouvement, le choix du mode de fonctionnement compte tenu de l'application est plus pertinent.

Dans un premier mode de réalisation de l'invention, cet étage de détection de mouvement est caractérisé en ce que, dans chacune des voies de filtrage, lesdits moyens de filtrage vertical pondéré comprennent un circuit de filtrage vertical, un circuit d'extraction de valeur absolue et un circuit d'accumulation, chaque circuit de filtrage vertical étant prévu pour opérer sur N lignes, avec N impair et symétrie des coefficients de filtrage par rapport à la ligne centrale commune, lesdites lignes étant N lignes d'image successives de chaque bloc ou macrobloc dans le cas de la première voie de filtrage et, dans le cas de la deuxième voie de filtrage, N lignes successives de celle des deux trames à laquelle, dans ledit bloc ou macrobloc, appartient ladite ligne centrale, de rang (N+1)/2, desdites N lignes d'image successives. La somme des coefficients de filtrage pour chaque circuit de filtrage est de préférence nulle.

Dans une structure particulièrement simple de ce premier mode de réalisation, l'étage de détection de mouvement est caractérisé en ce que le premier circuit de filtrage vertical est prévu pour opérer entre trois lignes successives de rang M-1, M, M+1 de chaque bloc ou macrobloc et en ce que le deuxième circuit de filtrage vertical est prévu pour opérer entre trois lignes successives de rang M-2, M, M+2 de la même trame dans chaque bloc ou macrobloc, avec, pour chaque filtre, des coefficients respectivement égaux à 1, -2, 1 pour chacun des trois points d'image ainsi considérés.

Dans un deuxième mode de réalisation de l'invention, l'étage de détection de mouvement est caractérisé en ce que, dans chacune des voies de filtrage, lesdits moyens de filtrage vertical pondéré comprennent un circuit de calcul, pour chacune des demi-colonnes supérieure et inférieure de chaque colonne du bloc ou du macrobloc considéré, de la moyenne desdits signaux associés à chaque point d'image, un circuit de calcul de variance pour chacune desdites demi-colonnes supérieure et inférieure, et un circuit d'addition des variances ainsi calculées pour l'ensemble desdites demi-colonnes supérieures et inférieures, la première voie de filtrage étant prévue pour opérer sur chaque ligne successive de tout le bloc ou macrobloc à trames entrelacées et la deuxième voie de filtrage étant prévue pour opérer, dans tout le bloc ou macrobloc à trames entrelacées, successivement et distinctement sur chaque ligne successive d'une des trames et sur chaque ligne successive de l'autre trame.

Un autre but de l'invention est également de proposer l'utilisation d'un étage de détection de mouvement tel que défini précédemment dans un dispositif de codage de signaux numériques correspondant à des images initiales à trames entrelacées subdivisés en blocs ou en macroblocs regroupant un nombre déterminé desdits blocs, comprenant une voie de codage à longueur variable et une voie de prédiction associée.

L'invention concerne à cet effet un dispositif de codage, caractérisé en ce qu'il comprend également un sous-ensemble de désentrelacement des blocs, ou des macroblocs, comprenant lui-même :
(a) un étage de détection de mouvement selon l'une des structures définies précédemment, prévu pour recevoir les signaux destinés à ladite voie de codage ;
(b) un étage de commutation prévu pour autoriser dans la voie de codage, en réponse audit étage de détection, le désentrelacement des blocs ou macroblocs et, de façon correspondante dans la voie de prédiction associée, le réentrelacement des blocs ou macroblocs.

Dans un mode préférentiel de réalisation, ce dispositif de codage, dans lequel la voie de codage comprend, en série, un circuit de transformation cosinus discrète, un circuit de quantification, un circuit de codage à longueur variable, et une mémoire-tampon de stockage des mots codés, ainsi que, entre cette mémoire et le circuit de quantification, un circuit de régulation de débit, et la voie de prédiction associée, comprend en série, en sortie du circuit de quantification, un circuit de quantification inverse, un circuit de transformation cosinus discrète inverse, un sous-ensemble de prédiction avec compensation de mouvement, et un soustracteur délivrant des signaux de différence entre chaque bloc d'image courant et chaque bloc prédit, est plus particulièrement caractérisé en ce que l'étage de commutation comprend lui-même :
(a) dans la voie de codage, un premier commutateur dont l'entrée commune est reliée à la sortie du soustracteur, un deuxième commutateur dont la sortie commune est reliée à l'entrée du circuit de transformation cosinus discrète, et, entre les bornes non communes de ces deux commutateurs, deux branches en parallèle dont l'une est une liaison directe et dont l'autre réalise la même liaison mais par l'intermédiaire d'un circuit de désentrelacement de bloc ;
(b) dans la voie de prédiction, un troisième commutateur dont l'entrée commune est reliée à la sortie du circuit de transformation cosinus discrète inverse, un quatrième commutateur dont la sortie commune est reliée au sous-ensemble de prédiction, et, entre les bornes non communes de ces deux commutateurs, deux autres branches en parallèle dont l'une est une liaison directe et dont l'autre réalise la même liaison mais par l'intermédiaire d'un circuit de réentrelacement de bloc.

Les particularités de l'invention apparaîtront maintenant de façon plus précise dans la description qui suit et dans les dessins annexés, donnés à titre d'exemple non limitatif et dans lesquels :
- la figure 1 montre un premier exemple de réalisation de l'étage de détection de mouvement selon l'invention :
- la figure 2 illustre le choix des lignes de chaque bloc d'image sur lesquelles sont réalisés les filtrages verticaux prévus dans ledit étage de détection de mouvement de la figure 1 ;
- la figure 3 montre un deuxième exemple de réalisation de l'étage de détection de mouvement selon l'invention ;
- la figure 4 montre un exemple de réalisation d'un dispositif de codage comprenant un étage de détection de mouvement conforme à l'invention.

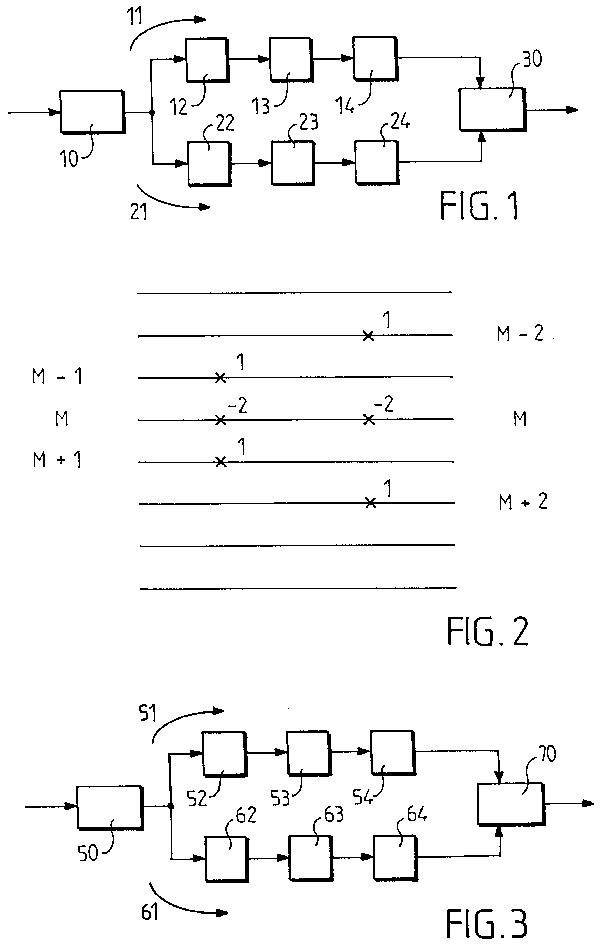

La structure représentée sur la figure 1 comprend tout d'abord un circuit de conversion de format 10 qui reçoit les signaux numériques d'entrée, dans le cas présent des images de télévision, à deux trames entrelacées. Ces signaux d'entrée correspondent ici à des signaux de luminance ou de chrominance. Le circuit 10 assure la subdivision des signaux d'origine, correspondant aux images, en blocs de m x n pixels, qui sont toujours à trames entrelacées, comme lesdites images d'origine (dans de nombreuses applications, on prend par exemple m = n = 8, ou 16).

Les blocs de pixels ainsi constitués sont alors envoyés vers deux voies 11 et 21 en parallèle, destinées au filtrage des blocs ainsi obtenus. La première voie de filtrage 11 comprend des moyens de filtrage vertical pondéré qui, dans l'exemple décrit, comprennent eux-mêmes, en série, un premier filtre vertical 12, un premier circuit 13 d'extraction de valeur absolue, et un premier circuit 14 d'accumulation, sur tout le bloc considéré, des signaux de sortie du circuit précédent. De même, la deuxième voie de filtrage 21 comprend des moyens similaires, à savoir, en série, un deuxième filtre vertical 22, un deuxième circuit 23 d'extraction de valeur absolue, et un deuxième circuit d'accumulation 24. Les circuits d'extraction de valeur absolue sont particulièrement utiles dans les zones d'image où les pixels considérés pour le filtrage vertical sont au voisinage de frontières entre des régions de niveaux de luminance ou de chrominance différents.

Le premier filtre vertical 12 est un filtre intra-image, opérant entre N lignes successives du bloc d'image considéré, avec N impair. La somme des coefficients de filtrage attachés respectivement à chaque ligne est de préférence nulle, et ces coefficients sont symétriques par rapport à la ligne centrale de ces N lignes. Dans l'exemple ici décrit, illustré sur la partie gauche de la figure 2 représentant les huit lignes d'un bloc de 8 x 8 pixels, le filtre vertical choisi opère entre trois lignes successives M-1, M, M+1, avec des coefficients ici égaux à 1, -2, 1 respectivement pour chacun des trois pixels considérés (1 pour les pixels des lignes M-1 et M+1, qui appartiennent à l'une des deux trames, -2 pour le pixel de la ligne M, qui appartient à l'autre trame).

Le deuxième filtre vertical 22 est, lui, un filtre intra-trame, opérant entre N lignes successives de la même trame dans le bloc d'image considéré. Dans ce deuxième filtre, le nombre N est identique à celui choisi dans le cas du premier filtre, et la ligne centrale est la même dans les deux cas. Les coefficients de filtrage sont les mêmes que précédemment, et sont donc symétriques par rapport à cette ligne centrale, avec une somme également nulle. Dans l'exemple décrit, illustré sur la partie droite de la figure 2, le filtre vertical opère donc ici entre trois lignes M-2, M, M+2, avec des coefficients égaux aussi à 1, -2, 1 respectivement pour chacun des pixels considérés.

Après extraction de valeur absolue (par les circuits 13 et 23), chaque circuit d'accumulation, 14 ou 24 respectivement, effectue la somme de tous les signaux résultant du filtrage vertical correspondant, opéré pour chacun des pixels du bloc d'image considéré. Si le pixel central du filtre est sur la première ou sur la dernière ligne, on fait à ce moment-là exceptionnellement appel à des pixels voisins d'un autre bloc d'image. Les sorties respectives des circuits 14 et 24 sont alors envoyées vers les première et deuxième entrées d'un comparateur 30 qui effectue la comparaison des signaux de sortie des première et deuxième voies de filtrage, c'est-à-dire la comparaison des signaux filtrés accumulés. L'existence d'un mouvement inter-trames ou non est constatée selon que la sortie de la première voie de filtrage 11 est supérieure ou au contraire inférieure à celle de la deuxième voie de filtrage 21. Le signal de sortie du comparateur 30 joue le rôle du signal de commutation mentionné dans la description du système selon la demande de brevet européen citée.

Dans un deuxième mode de réalisation représenté sur la figure 3, l'étage de détection de mouvement comprend, de façon similaire à ce qui a été vu précédemment en référence à la figure 1, un circuit de conversion de format 50, identique au circuit 10, et deux voies de filtrage 51 et 61 en parallèle, qui, comme précédemment, incluent les moyens de filtrage vertical pondéré prévus dans le cadre de l'invention. Dans l'exemple ici décrit, la première voie de filtrage 51 comprend, en série, un premier circuit 52 de calcul, pour chacune des demi-colonnes supérieure et inférieure de chaque colonne du bloc considéré, de la moyenne des signaux associés à chaque point d'image, un premier circuit 53 de calcul de variance pour chacune desdites demi-colonnes supérieure et inférieure, et un premier circuit 54 d'addition des variances ainsi calculées pour l'ensemble desdites demi-colonnes supérieures et inférieures (c'est-à-dire pour l'ensemble des colonnes). Cette voie de filtrage 51 est prévue pour opérer sur chacune des lignes successives de tout le bloc (donc sur des lignes qui appartiennent successivement à l'une des trames et à l'autre).

De même, la deuxième voie de filtrage 61 comprend, en série, des moyens similaires, à savoir des deuxièmes circuits 62 à 64, mais elle est cette fois prévue pour opérer, dans tout le bloc à trames entrelacées, successivement sur chacune des lignes successives de l'une des deux trames, puis, distinctement, sur chacune des lignes successives de l'autre trame. En cas de mouvement dans une image, la somme des variances est, dans ce cas, plus faible que la somme calculée par le circuit 54 pour le même bloc. Un comparateur 70, qui reçoit les sorties respectives des circuits 54 et 64 sur ses première et deuxième entrées, délivre un signal de sortie qui exprime cette situation d'existence ou d'absence d'un mouvement inter-trames et qui, comme celui du comparateur 30, joue le rôle du signal de commutation mentionné dans la description du système selon le document cité.

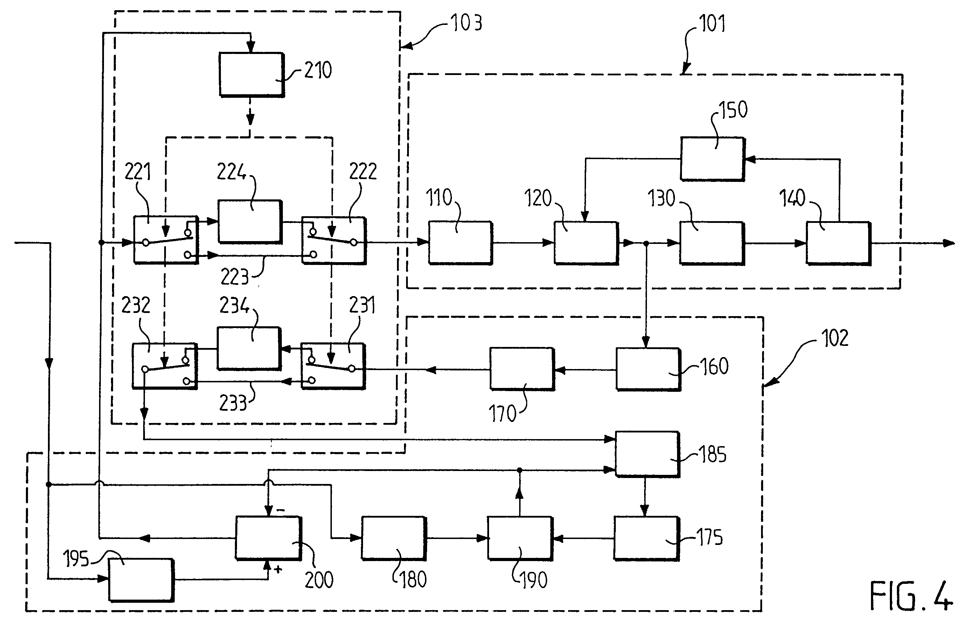

Un étage de détection de mouvement tel que décrit dans les modes de réalisation précédents peut être utilisé par exemple dans un dispositif de codage comme celui représenté sur la figure 4. Ce dispositif comprend, dans cet exemple, d'une part, de façon classique, une voie de codage 101 et une voie de prédiction associée 102, et d'autre part un sous-ensemble 103 de désentrelacement des blocs en cas de mouvement inter-trames, incluant un étage de détection de mouvement selon l'invention.

Plus précisément, la voie de codage 101 comprend, en série, un circuit 110 de transformation cosinus discrète, un circuit de quantification 120, un circuit 130 de codage à longueur variable, et une mémoire-tampon 140 de stockage des mots codés, ainsi que, entre cette mémoire et le circuit de quantification, un circuit 150 de régulation de débit. La voie de prédiction 102, prévue en sortie du circuit de quantification 120, comprend en série un circuit de quantification inverse 160, un circuit 170 de transformation cosinus discrète inverse, et un sous-ensemble de prédiction 175 à 195. Les signaux de sortie du circuit 170 sont envoyés, par l'intermédiaire d'un étage de commutation présent dans ledit sous-ensemble 103 et décrit plus loin, vers une première entrée d'un additionneur 185 dont la sortie est stockée dans une mémoire d'image 175. La sortie de cette mémoire 175 est envoyée vers un étage de compensation de mouvement qui comprend un circuit d'estimation de mouvement 180 et un circuit de compensation de mouvement 190 (c'est ce circuit 190 qui, sur une première entrée, reçoit la sortie de ladite mémoire 175). Le circuit 180 reçoit ici les signaux numériques d'entrée du dispositif de codage et détermine ici, pour chaque bloc d'image, un vecteur de déplacement représentatif de son mouvement par rapport au bloc correspondant de l'image précédente (cette détermination est connue sous le nom de reconnaissance bloc à bloc, ou "block matching" en anglais). Le vecteur ainsi déterminé est envoyé vers la deuxième entrée du circuit de compensation de mouvement 190, et celui-ci délivre un bloc prédit dont la différence avec le bloc précédent est déterminée dans un soustracteur 200 placé en amont du circuit de transformation cosinus discrète 110. Le bloc prédit est également renvoyé vers une deuxième entrée de l'additionneur 185.

Le soustracteur 200 reçoit sur une première entrée la sortie d'un circuit 195 de conversion de format qui, lui-même, reçoit les signaux numériques d'entrée du dispositif (correspondant à des images) pour les présenter, à sa sortie, par blocs. Ces signaux numériques de sortie du soustracteur 200, correspondant aux blocs d'image successifs et représentant la différence entre chaque bloc d'image courant et le bloc prédit qui en est déduit après les opérations effectuées dans la voie de prédiction, sont alors envoyés, par l'intermédiaire du sous-ensemble de désentrelacement décrit ci-après, vers l'entrée du circuit 110 de transformation cosinus discrète.

Le sous-ensemble 103 de désentrelacement des blocs comprend, conformément à l'invention, d'une part un étage de détection de mouvement 210, tel que décrit dans l'un des modes de réalisation précédents, et d'autre part un étage de commutation selon le résultat de ladite détection, comprenant lui-même d'une part, dans la voie de codage 101, un premier commutateur 221 dont l'entrée commune est reliée à la sortie du soustracteur 200, un deuxième commutateur 222 dont la sortie commune est reliée à l'entrée du circuit 110 de transformation cosinus discrète, et, entre les bornes non communes de ces deux commutateurs 221 et 222, deux branches en parallèle dont l'une est une liaison directe 223 entre ladite sortie du soustracteur 200 et ladite entrée du circuit 110 et dont l'autre réalise la même liaison mais par l'intermédiaire d'un circuit 224 de désentrelacement de bloc, et d'autre part, dans la voie de prédiction 102, un troisième commutateur 231 dont l'entrée commune est reliée à la sortie du circuit 170 de transformation cosinus discrète inverse, un quatrième commutateur 232 dont la sortie commune est reliée à la première entrée de l'additionneur 185, et, entre les bornes non communes de ces deux commutateurs 231 et 232, deux autres branches en parallèle dont l'une est une liaison directe 233 entre ladite sortie du circuit 170 et ladite première entrée de l'additionneur 185 et dont l'autre réalise la même liaison mais par l'intermédiaire d'un circuit 234 de réentrelacement de bloc. En effet, si, par suite de la détection d'un mouvement suffisant, le bloc courant a été désentrelacé avant transformation cosinus discrète, le bloc prédit doit être cependant disponible sous forme entrelacée (puisque le calcul de différence réalisé par le soustracteur 200 se situe avant ladite opération de désentrelacement), afin que la différence entre blocs courant et prédit soit déterminée à partir de blocs de même structure.

Bien entendu, la présente invention n'est pas limitée aux exemples de réalisation ci-dessus et représentés, à partir desquels des variantes peuvent être proposées sans pour cela sortir du cadre de l'invention. Il est manifeste, en particulier, que les signaux correspondant aux images, traités par blocs dans les exemples décrits jusqu'à présent, peuvent être regroupés différemment et par exemple traités par macroblocs de (p x m) x (q x n) points d'image, ces macroblocs regroupant un nombre déterminé de blocs, avec p et q entiers (un exemple couramment choisi est p = q = 2).

Par ailleurs, l'étage de détection de mouvement qui a été décrit plus haut dans diverses réalisations trouve tout particulièrement sa place dans un ensemble de codage de signaux numériques correspondant à des images de télévision, tel que celui qui fait l'objet dudit document, ou dans un dispositif de codage tel que celui qui vient d'être décrit. Cependant, comme on l'a vu, ces applications, ne sont pas limitatives, de même que les dimensions des blocs considérés.

## Revendications

1. Etage de détection de mouvement dans des signaux numériques correspondant à des images initiales à trames entrelacées, caractérisé en ce qu'il comprend :
(a) un circuit de conversion de format, pour la subdivision desdits signaux en blocs de m x n points d'image ou en macroblocs de (p x m) x (q x n) points d'image regroupant un nombre déterminé desdits blocs, les nombres m,n,p et q étant des entiers positifs :
(b) en parallèle sur la sortie dudit circuit, des première et deuxième voies de filtrage de chacun desdits blocs ou macroblocs, comprenant chacune des moyens de filtrage vertical pondéré prévus pour opérer sur des lignes d'image successives de chaque bloc ou macrobloc dans le cas de la première voie de filtrage et sur des lignes de trame successives de chaque bloc ou macrobloc dans le cas de la deuxième voie de filtrage ;
(c) un comparateur des signaux de sortie desdites première et deuxième voies de filtrage.

2. Etage de détection de mouvement selon la revendication 1, caractérisé en ce que, dans chacune des voies de filtrage, lesdits moyens de filtrage vertical pondéré comprennent un circuit de filtrage vertical, un circuit d'extraction de valeur absolue et un circuit d'accumulation, chaque circuit de filtrage vertical étant prévu pour opérer sur N lignes, avec N impair et symétrie des coefficients de filtrage par rapport à la ligne centrale commune, lesdites lignes étant N lignes d'image successives de chaque bloc ou macrobloc dans le cas de la première voie de filtrage et, dans le cas de la deuxième voie de filtrage, N lignes successives de celle des deux trames à laquelle, dans ledit bloc ou macrobloc, appartient ladite ligne centrale, de rang (N+1)/2, desdites N lignes d'image successives.

3. Etage de détection de mouvement selon la revendication 2, caractérisé en ce que la somme des coefficients de filtrage pour chaque circuit de filtrage est nulle.

4. Etage de détection de mouvement selon la revendication 3, caractérisé en ce que le premier circuit de filtrage vertical est prévu pour opérer entre trois lignes successives de rang M-1, M, M+1 de chaque bloc ou macrobloc et en ce que le deuxième circuit de filtrage vertical est prévu pour opérer entre trois lignes successives de rang M-2, M, M+2 de la même trame dans chaque bloc ou macrobloc, avec, pour chaque filtre, des coefficients respectivement égaux à 1, -2, 1 pour chacun des trois points d'image ainsi considérés.

5. Etage de détection de mouvement selon la revendication 1, caractérisé en ce que, dans chacune des voies de filtrage, lesdits moyens de filtrage vertical pondéré comprennent un circuit de calcul, pour chacune des demi-colonnes supérieure et inférieure de chaque colonne du bloc ou du macrobloc considéré, de la moyenne desdits signaux associés à chaque point d'image, un circuit de calcul de variance pour chacune desdites demi-colonnes supérieure et inférieure, et un circuit d'addition des variances ainsi calculées pour l'ensemble desdites demi-colonnes supérieures et inférieures, la première voie de filtrage étant prévue pour opérer sur chaque ligne successive de tout le bloc ou macrobloc à trames entrelacées et la deuxième voie de filtrage étant prévue pour opérer, dans tout le bloc ou macrobloc à trames entrelacées, successivement et distinctement sur chaque ligne successive d'une des trames et sur chaque ligne succesive de l'autre trame.

6. Dispositif de codage de signaux numériques correspondant à des images initiales à trames entrelacées subdivisés en blocs ou en macroblocs regroupant un nombre déterminé desdits blocs, comprenant une voie de codage à longueur variable et une voie de prédiction associée, caractérisé en ce qu'il comprend également un sous-ensemble de désentrelacement des blocs, ou des macroblocs, comprenant lui-même :
(a) un étage de détection de mouvement selon l'une des revendications 1 à 5, prévu pour recevoir les signaux destinés à ladite voie de codage ;
(b) un étage de commutation prévu pour autoriser dans la voie de codage, en réponse audit étage de détection, le désentrelacement des blocs ou macroblocs et, de façon correspondante dans la voie de prédiction associée, le réentrelacement des blocs ou macroblocs.

7. Dispositif de codage selon la revendication 6, dans lequel la voie de codage comprend, en série, un circuit de transformation cosinus discrète, un circuit de quantification, un circuit de codage à longueur variable, et une mémoire-tampon de stockage des mots codés, ainsi que, entre cette mémoire et le circuit de quantification, un circuit de régulation de débit, et la voie de prédiction associée comprend en série, en sortie du circuit de quantification, un circuit de quantification inverse, un circuit de transformation cosinus discrète inverse, un sous-ensemble de prédiction avec compensation de mouvement, et un soustracteur délivrant des signaux de différence entre chaque bloc d'image courant et chaque bloc prédit, caractérisé en ce que l'étage de commutation comprend lui-même :
(a) dans la voie de codage, un premier commutateur dont l'entrée commune est reliée à la sortie du soustracteur, un deuxième commutateur dont la sortie commune est reliée à l'entrée du circuit de transformation cosinus discrète, et, entre les bornes non communes de ces deux commutateurs, deux branches en parallèle dont l'une est une liaison directe et dont l'autre réalise la même liaison mais par l'intermédiaire d'un circuit de désentrelacement de bloc ;
(b) dans la voie de prédiction, un troisième commutateur dont l'entrée commune est reliée à la sortie du circuit de transformation cosinus discrète inverse, un quatrième commutateur dont la sortie commune est reliée au sous-ensemble de prédiction, et, entre les bornes non communes de ces deux commutateurs, deux autres branches en parallèle dont l'une est une liaison directe et dont l'autre réalise la même liaison mais par l'intermédiaire d'un circuit de réentrelacement de bloc.
